# EUROPÄISCHE PATENTANMELDUNG

(11) **EP 3 202 753 A1**
(43) Veröffentlichungstag der Anmeldung: **09.08.2017**
(21) Anmeldenummer: 16154697.3
(22) Anmeldetag: 08.02.2016
(51) Int. Cl.: C05D 9/00

(54) **ZUSAMMENSETZUNG UMFASSEND ZEOLITH**

(71) Anmelder: Lithos Industrial Minerals GmbH, 4482 Ennsdorf (AT)
(72) Erfinder: Rametsteiner, Karl, 4040 Linz (AT)
(74) Vertreter: KLIMENT & HENHAPEL

(57) **Zusammenfassung**

Die vorliegende Erfindung betrifft eine Zusammensetzung enthaltend Partikel umfassend mindestens ein Zeolith, wobei die Partikel zumindest teilweise mit zumindest einem Schichtsilikat beschichtet sind.

## Beschreibung

Die vorliegende Erfindung betrifft eine Zusammensetzung enthaltend Partikel umfassend Zeolith.

Die progressiv steigende Weltbevölkerung und der damit analog einhergehende Nahrungsmittelbedarf, verstärkt durch die Erwartung erhöhter Lebensstandards, erfordert hohe Anstrengungen, diese Anforderung zeitnah zu erfüllen.

Um die Produktion von Nahrungsmitteln auf Pflanzenbasis zu erhöhen, werden gegenwärtig folgende Ansätze verfolgt:
1.) Umwandlung von Urwäldern, Steppenflächen und Brachland in landwirtschaftliche Nutzflächen mit z.T. dramatischen ökologischen Folgen.
2.) Verstärkte (oftmals überschießende) Düngung mit Basisnährstoff (N, P, K,) und Spurenelementen (B, Zn, Mo,....) mit starken Auswirkungen auf Grundwasser, Biodiversität und auch Ressourcenerschöpfung (insb. Phosphor).
3.) Züchtung von ertragsreichen Pflanzensorten, die insbesondere Monokulturen zur sinnvollen Nutzung erfordern, damit verbunden, eine besondere Schädlingsanfälligkeit.
4.) Gentechnische Veränderung des Genoms von Nutzpflanzen zur Ertragssteigerung, Verminderung der Schadanfälligkeit, Minderung der klimatischen Einflüsse, mit dem Nachteil legistischer Einschränkung und Konzentration auf monopole Anbieter durch die Möglichkeit von Schutzrechten auf diese Modifikationen.
5.) Erweiterung des Nutzflächenangebotes durch Hydrokulturtechniken unter teilweiser Nutzung der 3. Dimension (Begrünung von Wänden...), die hohen finanziellen Aufwand erfordern.

Da, wie angedeutet, diese Ansätze oftmals ethisch, logistisch, geographisch, ökologisch und ökonomisch beschränkt sind, besteht Bedarf an einfachen und nicht allzu pflanzenspezifischen Lösungsansätzen, die zeitnah und einfach in der Ausführung, zu relevanten Verbesserungen der Nahrungsmittelausbeuten bei gegebenen Kulturpflanzen auf verfügbaren Anbauflächen führen.

Ein Teilgebiet davon, ist die Anwendung bzw. der Einsatz von sogenannten Wachstumsverstärkern ("plant boosters"), die insbesondere die optimale Nutzung gegebenen Pflanzen- und Bodenmaterials sicherstellen sollen.

Zum Wachstum von Pflanzen sind die Faktoren Bodenverhältnisse, Witterung, eine auf die Pflanzenart angepasste Nährstoffzusammensetzung, Wasserversorgung und Nutzung des atmosphärischen CO₂-Angebotes von wesentlicher Bedeutung (Basisversorgung (Primäreffekte)). Die Wahl der Düngerzusammensetzung bezweckt, das Pflanzenwachstum hinsichtlich Ertrag, Qualität, Fruchtgröße und Pflanzengesundheit zu forcieren. Daneben ist es entscheidend, eine Über- bzw. eine Unterversorgung mit Nährstoffen aus ökologischen und ökonomischen Gründen zu vermeiden. Die Hauptbestandteile der Pflanzendünger sind: Stickstoff (N), Phosphor (P), Kalium (K) ("NPK") sowie Spurenelemente. Üblicherweise werden solche Mineralsalze über ein wässriges Medium durch die Wurzeln aufgenommen. Allerdings können Pflanzen auch gewisse Mengen an Mineralsalzen, die bei NPK allerdings nicht zur vollständigen Versorgung ausreichen, über ihre grünen Pflanzenteile (vorwiegend Blätter) aufnehmen. Diese sogenannte Blattdüngung wird vorteilhaft dann genutzt, wenn eine besonders rasche Nährstoffaufnahme erforderlich ist, die Bodenbeschaffenheit eine Aufnahme über die Wurzeln erschwert oder Spurenelemente in Kleinmengen an der richtigen Stelle zur Verfügung gestellt werden sollen.

Wachstumsförderer ("plant booster"), die für Sekundäreffekte verantwortlich sind, werden typischerweise auf die Blattoberflächen aufgebracht, da sie "nur" der essentiellen Mikroversorgung dienen. Wachstumsförderer stimulieren die Photosynthese und das Pflanzenwachstums, minimieren physiologische Stresssituationen (Dürre, Überbelichtung und dergleichen), erhöhen die Resistenz gegenüber Schädlingen und beschleunigen katalytisch die Mineralstoffaufnahme. In der Literatur werden Wachstumsförderer ("plant booster") hinreichend beschrieben.

WO 2015/061820 beschreibt die Bedeutung von Calcium für das Pflanzenwachstum, insbesondere die Regulierung des CO₂-Haushaltes via Spaltöffnungen an der Blattunterseite. Durch Einsatz von mikropartikelförmigen (35 µm) Calcit in Kombination mit Tensiden, die das Zeta-Potential der in Wasser suspendierten Calcitpartikeln in einen besonders wirksamen ("negativen") Bereich verschieben.

In Bangerth F (Ann. Rev. Phytopathol. 17(1979):97-122) wird die Wirkung des Calciums bzw. dessen Mangelerscheinungen genau beschrieben.

WO 2009/087426 empfiehlt ebenfalls den Einsatz von Karbonaten, insbesondere Calcitmicropartikeln, jedoch in einem Bereich von ≤ 5 Micrometer, wobei mindestens 10% der Partikel kleiner als 900 nm sein sollen. Die so verfügbare, biologisch wirksame Oberfläche der Partikel soll zumindest 3,2 m²/g erreichen. Gemeinsam mit Netzmitteln (Tensiden), Bindemitteln zum Fixieren an der Blattoberfläche, allenfalls Pflanzenhormonen, Stickstoffdüngern, Vitaminen, Aminosäuren, Spurenelementen und Pflanzenextrakten wird eine Formulierung mit Boosterwirkung beschrieben.

US 2011/022408 greift die Lösung, wie oben beschrieben, auf und erweitert die Karbonate (Ca, Mg, Fe, Mn, Zn) um zusätzliche Zeolith-Partikel, um die Siliziumversorgung sicher zu stellen. Im verwendeten Zeolith wird ein Silicium/Aluminiumverhältnis von 1:1 (Synthetischer Zeolith A) bis 1:10 (natürliche Zeolithe) definiert, wobei die Partikelgröße beider Mineralien mit 0,5-5 µm eingegrenzt wird. Der Zeolithanteil liegt bei etwa 50%.

AT 512 276 modifiziert das Calcit/Zeolithgemisch um den Zusatz von Dolomit, ebenfalls ein Karbonat, wobei der Zeolithgehalt auf eine Größenordnung von 3-10 % im Mineralstoffgemenge beschränkt wird.

In all diesen Dokumenten wird vorgeschlagen Calcit-Mikropartikel in einer Größe von 0,5-35 µm, gegebenenfalls in wässriger Suspension, zur Sicherstellung des Ca-Haushaltes der Pflanzen auf Blattoberflächen aufzubringen. Fallweise wird die Mitverwendung von Zeolithmikropartikeln in einer Menge von 3-50% des gesamten Mineralanteiles und in einer Größe von 0,5-10 µm empfohlen.

Um ein bestimmtes Zetapotential zu ermöglichen bzw. um die Verbreitung der Calcit-Mikropartikel auf der Blattoberfläche sicherzustellen wird die Zugabe von Tensiden als Netzmittel vorgeschlagen. Des Weiteren können Stickstoff- und/oder Kaliumdünger mitverwendet werden.

Die Verwendung von Tensiden, wie in der Literatur vorgeschlagen, erweist sich als nachteilig, da die Wirkung naturgemäß rein physikalisch beschränkt ist und diese Netzmittel unmittelbar nach deren Anwendung keine weiteren Aufgaben zu erfüllen haben und durch Regen rasch in den Boden ausgewaschen werden.

Als oberflächenwirksame Agentien haben Tenside natürlich erheblichen Einfluss auf diverse Organismen, da sie in deren Zellwänden oberflächenaktive Interaktionen stark beeinflussen. Dementsprechend wird in der Literatur auch vor der Problematik des Einbringens von Detergentien in den Boden gewarnt (siehe z.B. "Chemie und Biologie der Altlasten", Fachgruppe Wasserchemie (Editor), Wiley, 2009, Seite 54 ff; "Verhalten von Tensiden und ihre Auswirkungen auf die Mobilität organischer Schadstoffe in sorptionsschwachen Sandböden", Küchler, T., Potsdam, Univ., Diss., 1995). Darüber hinaus fällt auf, dass die Bedeutung des Calciums im Mikrostoffwechsel wohl erkannt und beschrieben wird, die zumindest ebenso notwendige Versorgung mit Magnesium wohl erwähnt ("Essentiell für Chlorophyllbildung und im Phosphatmetabolismus"), aber nicht ausreichend gewürdigt wird.

Magnesium kommt eine ähnlich zentrale Stellung zu, wie für den Menschen das Eisen: im Blutfarbstoff Häm, der dem Hämoglobin seinen Namen gibt, ist Eisen das zentrale Atom. Im Chlorophyll, das für die Pflanze überlebensnotwendig ist und das ähnlich wie das Häm aufgebaut ist, befindet sich stattdessen Magnesium an zentraler Stelle. Daher wirkt sich ein Magnesiummangel bei Pflanzen besonders stark auf die Photosynthese aus, die den Pflanzen das Überleben sichert. Auch auf die Synthese anderer Blattpigmente, wie Karotin und Xanthophyll, hat Magnesium eine positive Auswirkung. Des Weiteren fördert Magnesium viele Stoffwechselvorgänge. Zu diesen zählen unter Anderem die Atmung, der Eiweißaufbau, die ATP-Bildung und weitere enzymatische Reaktionen. Zudem ist Magnesium an der Regulierung des pH-Werts in den Chloroplasten und bei der Regelung des Quellzustandes des Plasmas beteiligt.

Überversorgungen sind dagegen weitaus seltener. Etwa 6 % des vorhandenen Magnesiums in Pflanzen werden im Chlorophyll gebunden. Kommt es zu einer Mangelsituation, wird Magnesium von den älteren Blättern zu den jüngeren Blättern transportiert, also umverteilt. Innerhalb der Pflanze sorgt Magnesium für die Stabilität von Zellmembranen, ist ein wichtiger Bestandteil des Nukleinsäuremechanismus und ein Kofaktor für zahlreiche Enzyme. Überschüssiges Magnesium in den Pflanzen wird in bläschenartigen Zellorganellen (Vakuolen) gespeichert.

Fehlendes Magnesium zeigt sich in einer Abnahme der Photosynthese und einer darauf folgenden Gelbfärbung des Blattes, wobei die Blattadern zunächst noch grün bleiben (Chlorose). Bei manchen Pflanzenarten zeigen sich rötliche Flecken. Es kann nicht ausreichend Chlorophyll gebildet werden, wenn das zentrale Magnesium-Ion fehlt. Dabei beginnt die Gelbfärbung bei den älteren Blättern und greift langsam auch auf die jüngeren Blätter über. Bleibt der Magnesiummangel bestehen, kommt es zu einer frühen Alterung der Pflanze: Blätter werden abgeworfen, die Früchte bleiben kleiner und werden holzig.

Besonders häufig kommt ein Magnesiummangel bei Pflanzen auf sauren, leichten Sandböden vor, wo Magnesium sehr leicht ausgewaschen werden kann. Auch ein Überangebot an Kalium und Stickstoff kann dazu führen, dass weniger Magnesium für die Pflanze zur Verfügung steht.

Wird dies jedoch von einem Wassermangel oder gar einer Dürre begleitet, kommt es zu einer Versauerung der Pflanze, durch Freisetzung von freien Radikalen auch zu oxidativen Schädigungen.

Es besteht zudem eine Konkurrenz mit der Calciumaufnahme. Das Angebotsverhältnis von Magnesium zu Calcium soll in einer Größenordnung von 1:2 bis max. 1:3 liegen.

Es ist somit eine Aufgabe der vorliegenden Erfindung eine wirksame Wachstumsförderer ("plant booster")-Formulierung bereitzustellen, die die bekannten und gewünschten Wachstumsfaktoren freigibt, jedoch keine Detergentien enthält. Zudem soll die Zusammensetzung eine nachhaltige Magnesiumversorgung sicherstellen.

Diese Aufgabe wird erfindungsgemäß mit Zusammensetzungen gelöst, die Partikel umfassend mindestens ein Zeolith enthalten, wobei die Partikel zumindest teilweise mit zumindest einem Schichtsilikat beschichtet sind.

Es hat sich überraschenderweise gezeigt, dass Pflanzen, die mit den erfindungsgemäßen Zeolith-Partikel behandelt werden, in jeglicher Hinsicht gestärkt werden, so dass dadurch schlussendlich ein höherer Ertrag bei der Ernte erzielt werden kann. Die erfindungsgemäße Zusammensetzung wird vorzugsweise durch Versprühen auf die Pflanzen aufgebracht, so dass die Nährstoffe direkt über die Blätter in die Pflanze aufgenommen werden. Vorteilhafterweise werden die Partikel in Wasser oder in einem wässrigen Medium suspendiert, wobei weitere Zusatzstoffe nicht zwingend erforderlich sind, um eine ausreichend stabile Suspension zu bilden und eine gleichmäßige Verteilung an der Pflanzenoberfläche zu ermöglichen, ohne jede Agglomeration, aber auch ohne Abperlen. Dieser feine gleichmäßige Film kann Pflanzen vor übermäßigen Sonnenstrahlen schützen und den sogenannten Sonnenbrand verhindern, bzw. hinauszögern.

Üblicherweise beinhalten vergleichbare Zusammensetzungen Tenside, um das Verteilen der Wirkstoffe auf der Oberfläche der Blätter zu verbessern. Da Tenside jedoch negative Auswirkungen auf den Boden und die schlussendlich auf die Pflanzen haben, umfassen die Zusammensetzungen der vorliegenden Erfindung anstelle von Tensiden zumindest ein Schichtsilikat. Die durch das Vorhandensein von Schichtsilikaten erzielbare stabile Filmbildung ist überraschend, da anstelle der überaus hydrophilen Tenside Schichtsilikate, wie z.B. Talk, verwendet werden, wobei zu erwarten wäre, dass eine, wie oben beschriebene, feine und gleichmäßige Applikation über die gesamte Pflanzenoberfläche, nicht erreichbar sein würde. Nach erfolgter Abtrocknung der erfindungsgemäßen Zusammensetzung an der Pflanzenoberfläche, wenn diese als wässrige Suspension aufgetragen wird, ist die Haftung der erfindungsgemäßen Partikel an der Pflanzenoberfläche so stabil, dass üblicher Regen zu keinen erkennbaren Abwaschungen führt. Andererseits kommt es auch zu einer rascheren Blattabtrocknung und führt durch den Entzug der Lebensgrundlage Wasser zu einer Verminderung des Befalles mit Schadpilzen und Bakterien.

Das an der Oberfläche der Partikel vorhandene Schichtsilikat schützt das Mineralgemisch, sprich das mindestens eine Zeolith, nach dem Auftragen auf den Pflanzen vor Regenwasser. Die Schichtsilikatbeschichtung zeigt genügend Porösität, um den Zeolithanteil einen regulatorischen Wasserhaushalt (zwischen 6 - 30% variabel) zu ermöglichen. Zeolith kann bis zu etwa 30% Wasser aufnehmen und diese Menge bei Trockenheit kontinuierlich bis auf einen stabilen Grenzwert von etwa 6-10%/je nach Zeolith-Type, wieder abgeben. Diese Pendelbewegung beruht auf der typischen Porenstruktur in der Größenordnung von z.B. 4 Angström.

Die erfindungsgemäße Zusammensetzung umfasst mindestens ein Zeolith, vorzugsweise mindestens zwei Zeolithe, noch mehr bevorzugt mindestens drei Zeolithe, noch mehr bevorzugt mindestens fünf Zeolithe.

Die erfindungsgemäße Zusammensetzung umfasst mindestens ein Schichtsilikat, vorzugsweise mindestens zwei Schichtsilikate, noch mehr bevorzugt mindestens drei Schichtsilikate, noch mehr bevorzugt mindestens fünf Schichtsilikate.

"Mindestens ein Zeolith" bzw. "mindestens ein Schichtsilikat", wie hier verwendet, bedeutet mindestens ein "Zeolithtyp" bzw. "Schichtsilikattyp".

"Zumindest teilweise beschichtet", wie hier verwendet, bedeutet, dass die Partikel umfassend mindestens ein Zeolith, mindestens zu 20%, vorzugsweise mindestens zu 40%, noch mehr bevorzugt mindestens zu 60%, noch mehr bevorzugt mindestens zu 80%, noch mehr bevorzugt mindestens zu 90%, mit mindestens ein Schichtsilikat beschichtet bzw. überzogen.

Gemäß einer bevorzugten Ausführungsform der vorliegenden Erfindung umfasst die Zusammensetzung Partikel umfassend mindestens ein Schichtsilikat umfasst.

Die erfindungsgemäße Zusammensetzung kann neben Partikeln umfassend Zeolith auch Partikel umfassend mindestens ein Schichtsilikat enthalten. Das mindestens eine Schichtsilikat, welches in diesen Partikeln enthalten ist, kann ident zu jenem mindestens einen Silikat sein, welches für die Beschichtung der Partikel umfassend das mindestens eine Zeolith verwendet wird.

Besonders bevorzugt ist eine Zusammensetzung umfassend Partikel aus Zeolith, welche zumindest teilweise oder zur Gänze mit einem Schichtsilikat, insbesondere mit Talk, beschichtet sind, und Partikel aus Schichtsilikat, insbesondere aus Talk.

Gemäß einer besonders bevorzugten Ausführungsform der vorliegenden Erfindung weist das mindestens eine Schichtsilikat eine Mohs-Härte von 3 oder weniger auf.

Die Verwendung von Schichtsilikaten wie Talk, die eine Mohs-Härte von 3 oder weniger aufweisen, ist besonders von Vorteil, da diese bei einem gemeinsamen Vermahlen, z.B., mit dem mindestens einen Zeolith in der Lage sind, eine Beschichtung an der Oberfläche des Zeoliths auszubilden. Besonders bevorzugt sind Schichtsilikate mit einer Mohs-Härte von weniger als 2, insbesondere von 1 oder weniger.

Die "Mohs-Härte" bzw. die "Mohs-Skala" ist eine Skala der Härte von Mineralien.

Gemäß einer besonders bevorzugten Ausführungsform der vorliegenden Erfindung weist das mindestens eine Schichtsilikat eine um Mohs-Härte 1, vorzugsweise 2, noch mehr bevorzugt 3, geringere Härte aufweist als der mindestens eine Zeolith.

Gemäß einer weiteren bevorzugten Ausführungsform der vorliegenden Erfindung weisen die Partikel umfassend das mindestens eine Zeolith bzw. das mindestens eine Schichtsilikat einen mittleren Durchmesser von weniger als 50 µm, vorzugsweise von weniger als 30 µm, noch mehr bevorzugt von weniger als 20 µm, noch mehr bevorzugt von weniger als 15 µm, noch mehr bevorzugt von weniger als 10 µm, noch mehr bevorzugt von weniger als 5 µm, auf.

"Mittlerer Durchmesser", wie hier verwendet, bedeutet, dass 50% der Partikel der erfindungsgemäßen Zusammensetzung den genannten Durchmesser aufweisen.

Gemäß einer besonders bevorzugten Ausführungsform der vorliegenden Erfindung weisen die Partikel einen Durchmesser von 0,5 bis 50 µm, vorzugsweise von 1 bis 30 µm, noch mehr bevorzugt von 1,5 bis 20 µm, noch mehr bevorzugt von 2 bis 15 µm, noch mehr bevorzugt von 2,5 bis 10 µm, auf.

Die erfindungsgemäßen Partikel können jegliche Form haben und weisen vorzugsweise die genannten Größen bzw. Größenverteilungen auf.

Das Gewichtsverhältnis von Zeolith zu Schichtsilikat in der erfindungsgemäßen Zusammensetzung beträgt vorzugsweise 100:0,1 bis 100:50, noch mehr bevorzugt 100:0,1 bis 100:30, noch mehr bevorzugt 100:1 bis 100:10, noch mehr bevorzugt 100:2 bis 100:5.

Gemäß einer bevorzugten Ausführungsform der vorliegenden Erfindung umfasst die Zusammensetzung mindestens ein Salz der Phosphorsäure, insbesondere der ortho-Phosphorsäure.

Gemäß einer weiteren bevorzugten Ausführungsform der vorliegenden Erfindung ist das Salz der Phosphorsäure ausgewählt aus der Gruppe bestehend aus Calciumphosphat, Magnesiumphosphat und Kombinationen davon.

Besonders bevorzugt werden Ca (H₂PO₄)₂, Mg(H₂PO₄)₂ und Kombinationen davon.

Gemäß einer bevorzugten Ausführungsform der vorliegenden Erfindung umfasst die Zusammensetzung 0,1 bis 20 Gew.%, vorzugsweise 0,2 bis 15 Gew.%, noch mehr bevorzugt 0,3 bis 10 Gew.%, noch mehr bevorzugt 0,4 bis 5 Gew.%, noch mehr bevorzugt 0,5 bis 3 Gew.%, des mindestens einen Salzes der Phosphorsäure bezogen auf Zeolith umfasst.

Abhängig von der Pflanzenart kann es durchaus von Vorteil sein, zusätzliche Düngeranteile in die erfindungsgemäße Zusammensetzung einzubringen. In vielen Fällen können mit der Zugabe von Stickstoff und Kalium keine weiteren Vorteile bei der Düngung mit der erfindungsgemäßen Zusammensetzung generiert werden. Lediglich die Zugabe von Phosphor, z.B. in Form von Calciumphosphaten, kann zu einer weiteren Ertragssteigerung führen.

Gemäß einer bevorzugten Ausführungsform der vorliegenden Erfindung ist das mindestens eine Zeolith ein natürliches oder synthetisches Zeolith.

Zeolithe kommen in der Natur vor oder können synthetisch hergestellt werden. Zeolithe haben die Zusammensetzung Mⁿ⁺_{x/n} [(A-lO₂)⁻ₓ (SiO₂)_{y}] z H₂O, wobei n die Ladung des Kations M eines Alkali- oder Erdalkalimetalls ist und meistens 1 oder 2 beträgt, z angibt, wie viele Wassermoleküle vom Kristall aufgenommen wurden. Das molare Verhältnis von SiO₂ zu AlO₂ bzw. y/x in der Summenformel kann aufgrund nicht kleiner als 1 sein.

Natürliche Zeolithe haben keine allgemein einheitliche Struktur sondern sind in der Regel Mischtypen. Die in Naturzeolith vorhandenen Anteile an SiO₂, Cao, K₂O und Fe₂O₃ reichen aus, die gewünschten Eigenschaften zur Stärkung von Pflanzen zu entfalten. Besonders bevorzugt werden Naturzeolithe in der erfindungsgemäßen Zusammensetzung eingesetzt, die folgende Mineralphasen aufweisen können:

| **Mineral-name** | **CPDS** | **Chemische Formel** | **Typ 1009** | **Typ 1010** | **Typ 1011** | **Typ 1012** | **Typ 1013** |
|---|---|---|---|---|---|---|---|
| | | | **Phasenteil** | | | | |
| Clinoptilolit | 948 | (Na, K, Ca, Mg)_{4.88}Al_{6.72} Si_{29.2}O₇₂24H₂O | - | + | + | + | + |
| Quarz | 3895 | SiO₂ | + | + | + | + | + |
| Mazzit-Na | 2804 | Na_{0.3}K_{2.5}Ca_{1.4}Mg_{2.1} [Alg. ₉Si_{26.5}O₇₂ ] 7H₂O | + | (+) | - | + | - |
| Illit | 6546 | K_{0.88}Al₂[Al_{0.88}Si_{3.12}O₁₀ ] (OH)₂ | + | - | + | + | + |
| Albit | 70 | (Na,K) [AlSi₃O₈] | + | + | + | + | + |
| Muskovit | 3644 | (K,Na)(Al,Mg,Fe)₂[S i₃Al]O₁₀(OH, F)₂ | - | + | - | - | - |

| | | | | | | | |
|---|---|---|---|---|---|---|---|
| CPDS ("Calculated Powder X-ray Diffraction Standards" Datenbank-nummer;http://database.iem.ac.ru/mincryst/index.php); - nicht vorhanden; + vorhanden; "1009", "1010","1011", "1012" und "1013" sind Bezeichnungen verschiedener Naturzeolithe bzw. Naturzeolithtypen. | | | | | | | |

Die Naturzeolithe, die in der erfindungsgemäßen Zusammensetzung eingesetzt werden können, können die folgenden Hauptbestandteile aufweisen:

| | **1009** | **1010** | **1011** | **1012** | **1013** |
|---|---|---|---|---|---|
| **SiO₂** | 72, 1 | 69, 7 | 69, 0 | 71, 7 | 70, 0 |
| **Al₂O₃** | 12, 8 | 12, 6 | 12, 3 | 12, 6 | 12, 7 |
| **Fe₂O₃** | 1,4 | 1,9 | 1,7 | 1,7 | 1,8 |
| **CaO** | 1,9 | 2,5 | 3,7 | 1,9 | 2,5 |
| **MgO** | 1,5 | 0,8 | 0,6 | 0,7 | 0,8 |
| **K₂O** | 2,3 | 3,5 | 3,7 | 2,7 | 3,5 |
| **Na₂0** | 1,1 | 1,2 | 0,8 | 1,7 | 1,2 |
| **Wasser** | 6,5 | 7,0 | 7,4 | 6,4 | 7,0 |

Gemäß einer bevorzugten Ausführungsform der vorliegenden Erfidnung ist das synthetische Zeolith ausgewählt ist aus der Gruppe bestehend aus Zeolith A (Na₁₂[(AlO₂)₁₂(SiO₂)₁₂] · 27H₂O), Zeolith X (Na₈₆[(AlO₂)₈₆(SiO₂)₁₀₆] · 264 H₂O), Zeolith Y (Na₅₆[(AlO₂)₅₆(SiO₂)₁₃₆] · 250 H₂O), Zeolith L (K₉ [ (AlO₂) 9 (SiO₂) ₂₇] · 22 H₂O), Mordenit (Na_{8,7}[(AlO₂)₈,₇(SiO₂)_{39,3}] · 24 H₂O), ZSM 5 (Na_{0,3}H_{3,8} [(AlO₂)_{4,1} (SiO₂) _{91,9}]), ZSM 11 (Na₀,₁H_{1,7}[(AlO₂)_{1,8}(SiO₂)₉₄,₂]) und Kombinationen davon.

Gemäß einer weiteren bevorzugten Ausführungsform der vorliegenden Erfindung ist das mindestens eine Schichtsilikat ausgewählt ist aus der Gruppe bestehend aus Talk, Vermiculit, Montmorillonit, Muskovit, Pyrophillit und Kombinationen davon.

Die erfindungsgemäß besonders bevorzugt verwendeten Schichtsilikate laut Strunz'scher Klassifikation umfassen Vermiculite, Montmorillonite, Muskovite, Pyrophillite und Talk, welche allesamt typische Magnesiumsilicat-Hydrate der allgemeinen Zusammensetzung Mg₃(Si₄O₁₀(OH)₂) sind. Besonders bevorzugt wird Talk als Schichtsilikat eingesetzt.

Talk umfasst vorteilhafter Weise 60 bis 62% SiO₂, 30 bis 34% MgO, 0,1 bis 0,5% CaO, 0,1 bis 0,5% Al₂O₃ und 0,1 bis 0,5% Fe₂O₃.

Da die erfindungsgemäße Zusammensetzung anstatt Tenside Schichtsilikate umfasst, ist die erfindungsgemäße Zusammensetzung im Wesentlichen frei von Tensiden.

Um die erfindungsgemäße Zusammensetzung auf Pflanzen aufzubringen, werden die erfindungsgemäßen Partikel vorzugsweise in einem wässrigen Medium, insbesondere in Wasser, suspendiert. Daher kann die erfindungsgemäße Zusammensetzung Wasser umfassen.

Gemäß einer bevorzugten Ausführungsform ist die Zusammensetzung eine Suspension, vorzugsweise eine wässrige Suspension, ist, die 0,1 bis 10 Gew.%, vorzugsweise 0,2 bis 5 Gew.%, noch mehr bevorzugt 0,5 bis 2 Gew.%, noch mehr bevorzugt 0,8 bis 1,5 Gew.%, Partikel umfasst.

Ein weiterer Aspekt der vorliegenden Erfindung betrifft ein Verfahren zur Herstellung einer Zusammensetzung gemäß der vorliegenden Erfindung umfassend den Schritt des Vermahlens mindestens eines Zeoliths und mindestens eines Schichtsilikats.

Das mindestens eine Zeolith kann gemeinsam mit oder getrennt von dem mindestens einen Schichtsilikat vermahlen werden. Erfindungsgemäß hat sich jedoch gezeigt, dass bei gleichzeitiger Vermahlung der beiden Mineralien, also nicht nachträglicher Mischung der feinteiligen Partikeln aus beiden Mineralien, die erfindungsgemäßen Partikel gleichzeitig mit dem zumindest einen Zeolith zumindest teilweise beschichtet werden. Mikroskopische Aufnahmen des erfindungsgemäßen Gemisches zeigen, dass die Talkpartikel, bedingt durch deren Weichheit (Mohshärte 1) über die härteren Zeolithpartikel (Mohshärte 4) im Sinne einer porösen, noch immer durchlässigen Beschichtung verteilt werden und sich dabei dachziegelartig überlappen.

Diese gemeinsame Vermahlung wird als besonders bevorzugter Schritt auch in der AT 515 276 beschrieben, allerdings für ein Gemenge von etwa gleichartig hydrophilen Mineralien, wie Calcit, Dolomit und Zeolith. Begründet wird dort dieser Verfahrensschritt durch die Verhinderung von unerwünschten, heterogenen Agglomerationen der Feinteile innerhalb des Wirkstoffgemenges.

Gemäß einer bevorzugten Ausführungsform der vorliegenden Erfindung wird der Schritt des Vermahlens mit einer Mühle, vorzugsweise mit einer Prallmühle, durchgeführt wird.

Die Zerkleinerung des Zeoliths bzw. des Schichtsilikats auf die gewünschte Größe der Partikel erfolgt vorzugsweise mit einer Mühle. Durch gemeinsames Vermahlen von Zeolith und Schichtsilikat kann zudem das Schichtsilikat aufgrund dessen geringeren Mohs-Härte auf die Oberfläche des Zeolith aufgebracht werden.

Ein weiterer Aspekt der vorliegenden Erfindung betrifft eine Zusammensetzung herstellbar mit einem Verfahren gemäß der vorliegenden Erfindung.

Ein noch weiterer Aspekt der vorliegenden Erfindung betrifft die Verwendung einer Zusammensetzung gemäß der vorliegenden Erfindung zur Behandlung von Pflanzen, vorzugsweise von Kulturpflanzen.

Die erfindungsgemäße Zusammensetzung zeichnet sich vor allem dadurch aus, dass diese das Pflanzenwachstum und den Ernteertrag signifikant steigern kann. Besonders bevorzugt wird die erfindungsgemäße Zusammensetzung als wässrige Suspension auf die Pflanzen aufgebracht.

Ein weiterer Aspekt der vorliegenden Erfindung betrifft ein Verfahren zur Behandlung von Pflanzen, insbesondere von Kulturpflanzen, umfassend den Schritt des Aufbringens einer erfindungsgemäßen Zusammensetzung.

Das erfindungsgemäße Verfahren umfasst als vorbereitenden Arbeitsschritt vorzugsweise das Bereitstellen einer geeigneten Menge der erfindungsgemäßen Zusammensetzung, welche gegebenenfalls mit Wasser versetzt wird, um eine Suspension auszubilden.

Gemäß einer bevorzugten Ausführungsform der vorliegenden Erfindung wird die Zusammensetzung auf die Pflanzen gesprüht.

Mittel und Verfahren zum Besprühen von Pflanzen sind hinreichend bekannt und können auch mit der erfindungsgemäßen Zusammensetzung eingesetzt werden.

Die erfindungsgemäße Zusammensetzung wird dabei vorzugsweise in einer Menge von 0,5 bis 20 kg, vorzugsweise 0,5 bis 15 kg, noch mehr bevorzugt 0,5 bis 10 kg, noch mehr bevorzugt 1 bis 5 kg, noch mehr bevorzugt 1,5 bis 4 kg, bezogen auf Zeolith und Schichtsilikat pro Hektar Kulturland auf die Pflanzen aufgebracht.

Je nach Pflanze und je nach Umweltbedingungen und Beschaffenheit des Bodens wird die erfindungsgemäße Zusammensetzung vorzugsweise 1 bis 10 mal, vorzugsweise 1 bis 8 mal, noch mehr bevorzugt 2 bis 5 mal, pro Kulturperiode auf die Pflanzen aufgebracht.

Gemäß einer besonders bevorzugten Ausführungsform der vorliegenden Erfindung wird die Zusammensetzung zumindest einmal zwischen BBCH Stadium 11 und 29, vorzugsweise zwischen BBCH Stadium 11 und 19, noch mehr bevorzugt zwischen BBCH Stadium 14 und 18, auf die Pflanzen aufgebracht.

Die erfindungsgemäße Zusammensetzung kann während verschiedener Wachstumsstadien der Pflanzen auf diese aufgebracht werden. Die Wachstumsstadien sind in der BBCH-Skala (**B**iologische Bundesanstalt, **B**undessortenamt und **C**hemische Industrie; siehe u.a. "Entwicklungsstadien mono- und dikotyler Pflanzen", BBCH Monografie, 2. Auflage (2001), Bearbeitet von Uwe Meier; Hack H et al. Allgemein. Nachrichtenbl. Deut. Pflanzenschutzd. 44 (1992): 265-270) dargestellt. Zudem kann die erfindungsgemäße Zusammensetzung einmal, zweimal, dreimal, fünf oder sogar fünf mal auf die Pflanzen in unterschiedlichen Wachstumsstadien aufgetragen werden. Wintergetreide, insbesondere Winterweizen, kann vorzugsweise frühestens im BBCH Stadium 15 oder 19 erstmals mit der erfindungsgemäßen Zusammensetzung behandelt werden. Weiters kann Wintergetreide ab BBCH Stadium 40 nochmals behandelt werden. Sommergetreide, insbesondere Sommerweizen, kann vorzugsweise frühestens im BBCH Stadium 15 oder 19 erstmals mit der erfindungsgemäßen Zusammensetzung behandelt werden. Weiters kann Sommergetreide ab BBCH Stadium 40 nochmals behandelt werden. Kartoffelpflanzen können vorzugsweise frühestens im BBCH Stadium 12 oder 15 erstmals mit der erfindungsgemäßen Zusammensetzung behandelt werden. Weiters können Kartoffelpflanzen nach mindestens 7, 14 oder 28 Tagen nochmals mindestens einmal oder zweimal behandelt werden. Bohnenpflanzen können vorzugsweise frühestens im BBCH Stadium 12 oder 15 erstmals mit der erfindungsgemäßen Zusammensetzung behandelt werden. Weiters können Bohnenpflanzen nach mindestens 7, 14 oder 28 Tagen nochmals mindestens einmal oder zweimal behandelt werden. Ölkürbispflanzen können vorzugsweise frühestens im BBCH Stadium 12 oder 15 erstmals mit der erfindungsgemäßen Zusammensetzung behandelt werden. Weiters können Ölkürbispflanzen nach mindestens 7, 14 oder 28 Tagen nochmals mindestens einmal oder zweimal behandelt werden. Salatpflanzen können vorzugsweise frühestens im BBCH Stadium 12 oder 15 erstmals mit der erfindungsgemäßen Zusammensetzung behandelt werden. Weiters können Salatpflanzen nach mindestens 7, 14 oder 28 Tagen nochmals mindestens einmal oder zweimal behandelt werden. Tomatenpflanzen können vorzugsweise frühestens im BBCH Stadium 12 oder 15 erstmals mit der erfindungsgemäßen Zusammensetzung behandelt werden. Weiters können Tomatenpflanzen nach mindestens 7, 14 oder 28 Tagen nochmals mindestens einmal oder zweimal behandelt werden. Sojapflanzen können vorzugsweise frühestens im BBCH Stadium 12 oder 15 erstmals mit der erfindungsgemäßen Zusammensetzung behandelt werden. Weiters können Sojapflanzen nach mindestens 7, 14 oder 28 Tagen nochmals mindestens einmal oder zweimal behandelt werden. Zuckerrübenpflanzen können vorzugsweise frühestens im BBCH Stadium 12 oder 15 erstmals mit der erfindungsgemäßen Zusammensetzung behandelt werden. Weiters können Zuckerrübenpflanzen nach mindestens 7, 14 oder 28 Tagen nochmals mindestens einmal oder zweimal behandelt werden.

Die vorliegende Erfindung wird anhand der folgenden Ausführungsformen und Beispiele eingehender dargelegt, ohne jedoch auf diese beschränkt zu sein.

Bevorzugte Ausführungsformen:
1. Zusammensetzung enthaltend Partikel umfassend mindestens ein Zeolith, wobei die Partikel zumindest teilweise mit zumindest einem Schichtsilikat beschichtet sind.
2. Zusammensetzung nach Ausführungsform 1, dadurch gekennzeichnet, dass die Zusammensetzung Partikel umfassend mindestens ein Schichtsilikat umfasst.
3. Zusammensetzung nach Ausführungsform 1 oder 2, dadurch gekennzeichnet, dass das mindestens eine Schichtsilikat eine Mohs-Härte von 3 oder weniger aufweist.
4. Zusammensetzung nach einem der Ausführungsformen 1 bis 3, dadurch gekennzeichnet, dass das mindestens eine Schichtsilikat eine um Mohs-Härte 1, vorzugsweise 2, noch mehr bevorzugt 3, geringere Härte aufweist als der mindestens eine Zeolith.
5. Zusammensetzung nach einem der Ausführungsformen 1 bis 4, dadurch gekennzeichnet, dass die Partikel einen mittleren Durchmesser von weniger als 50 µm, vorzugsweise von weniger als 30 µm, noch mehr bevorzugt von weniger als 20 µm, noch mehr bevorzugt von weniger als 15 µm, noch mehr bevorzugt von weniger als 10 µm, noch mehr bevorzugt von weniger als 5 µm, aufweisen.
6. Zusammensetzung nach einem der Ausführungsformen 1 bis 5, dadurch gekennzeichnet, dass die Partikel einen Durchmesser von 0,5 bis 50 µm, vorzugsweise von 1 bis 30 µm, noch mehr bevorzugt von 1,5 bis 20 µm, noch mehr bevorzugt von 2 bis 15 µm, noch mehr bevorzugt von 2,5 bis 10 µm, aufweisen.
7. Zusammensetzung nach einem der Ausführungsformen 1 bis 6, dadurch gekennzeichnet, dass das Gewichtsverhältnis von Zeolith zu Schichtsilikat in der Zusammensetzung 100:0,1 bis 100:50, vorzugsweise 100:0,1 bis 100:30, noch mehr bevorzugt 100:1 bis 100:10, noch mehr bevorzugt 100:2 bis 100:5, beträgt.
8. Zusammensetzung nach einem der Ausführungsformen 1 bis 7, dadurch gekennzeichnet, dass die Zusammensetzung mindestens ein Salz der Phosphorsäure, insbesondere der ortho-Phosphorsäure, umfasst.
9. Zusammensetzung nach Ausführungsform 8, dadurch gekennzeichnet, dass das Salz der Phosphorsäure ausgewählt ist aus der Gruppe bestehend aus Calciumphosphat, Magnesiumphosphat und Kombinationen davon.
10. Zusammensetzung nach Ausführungsform 8 oder 9, dadurch gekennzeichnet, dass die Zusammensetzung 0,1 bis 20 Gew.%, vorzugsweise 0,2 bis 15 Gew.%, noch mehr bevorzugt 0,3 bis 10 Gew.%, noch mehr bevorzugt 0,4 bis 5 Gew.%, noch mehr bevorzugt 0,5 bis 3 Gew.%, des mindestens einen Salzes der Phosphorsäure bezogen auf Zeolith umfasst.
11. Zusammensetzung nach einem der Ausführungsformen 1 bis 10, dadurch gekennzeichnet, dass das mindestens eine Zeolith ein natürliches oder synthetisches Zeolith ist.
12. Zusammensetzung nach Ausführungsform 11, dadurch gekennzeichnet, dass das synthetische Zeolith ausgewählt ist aus der Gruppe bestehend aus Zeolith A (Na₁₂[(AlO₂)₁₂(SiO₂)₁₂] · 27 H₂O), Zeolith X (Na₈₆[(AlO₂)₈₆(SiO₂)₁₀₆] · 264 H₂O), Zeolith Y (Na₅₆[(AlO₂)₅₆(SiO₂)_{136]} · 250 H₂O), Zeolith L (K₉[(AlO₂)₉(SiO₂)₂₇] · 22 H₂O), Mordenit (Na_{8,7}[(AlO₂)_{8,7}(SiO₂)_{39.3}] · 24 H₂O), ZSM 5 (Na_{0,3}H_{3,8}[(AlO₂)_{4,1}(SiO₂)_{91,9}]), ZSM 11 (Na_{0,1}H_{1,7}[(AlO₂)_{1,8}(SiO₂)_{94,2}]) und Kombinationen davon.
13. Zusammensetzung nach einem der Ausführungsformen 1 bis 12, dadurch gekennzeichnet, dass das mindestens eine Schichtsilikat ausgewählt ist aus der Gruppe bestehend aus Talk, Vermiculit, Montmorillonit, Muskovit, Pyrophillit und Kombinationen davon.
14. Zusammensetzung nach einem der Ausführungsformen 1 bis 13, dadurch gekennzeichnet, dass die Zusammensetzung im Wesentlichen frei von Tensiden ist.
15. Zusammensetzung nach einem der Ausführungsformen 1 bis 14, dadurch gekennzeichnet, dass die Zusammensetzung Wasser umfasst.
16. Zusammensetzung nach einem der Ausführungsformen 1 bis 15, dadurch gekennzeichnet, dass die Zusammensetzung eine Suspension, vorzugsweise eine wässrige Suspension, ist, die 0,1 bis 10 Gew.%, vorzugsweise 0,2 bis 5 Gew.%, noch mehr bevorzugt 0,5 bis 2 Gew.%, noch mehr bevorzugt 0,8 bis 1,5 Gew.%, Partikel umfasst.
17. Verfahren zur Herstellung einer Zusammensetzung nach einem der Ausführungsformen 1 bis 16 umfassend den Schritt des Vermahlens mindestens eines Zeoliths und mindestens eines Schichtsilikats.
18. Verfahren nach Ausführungsform 17, dadurch gekennzeichnet, dass der Schritt des Vermahlens mit einer Mühle, vorzugsweise mit einer Prallmühle, durchgeführt wird.
19. Zusammensetzung herstellbar mit einem Verfahren nach Ausführungsform 17 oder 18.
20. Verwendung einer Zusammensetzung nach einem der Ausführungsformen 1 bis 16 oder 19 zur Behandlung von Pflanzen, vorzugsweise von Kulturpflanzen.
21. Verfahren zur Behandlung von Pflanzen, insbesondere von Kulturpflanzen, umfassend den Schritt des Aufbringens einer Zusammensetzung nach einem der Ausführungsformen 1 bis 16 oder 19 auf Pflanzen, insbesondere auf Kulturpflanzen.
22. Verfahren nach Ausführungsform 21, dadurch gekennzeichnet, dass die Zusammensetzung auf die Pflanzen gesprüht wird.
23. Verfahren nach Ausführungsform 21 oder 22, dadurch gekennzeichnet, dass die Zusammensetzung in einer Menge von 0,5 bis 20 kg, vorzugsweise 0,5 bis 15 kg, noch mehr bevorzugt 0,5 bis 10 kg, noch mehr bevorzugt 1 bis 5 kg, noch mehr bevorzugt 1,5 bis 4 kg, bezogen auf Zeolith und Schichtsilikat pro Hektar Kulturland auf die Pflanzen aufgebracht wird.
24. Verfahren nach einem der Ausführungsformen 21 bis 23, dadurch gekennzeichnet, dass die Zusammensetzung 1 bis 10 mal, vorzugsweise 1 bis 8 mal, noch mehr bevorzugt 2 bis 5 mal, pro Kulturperiode auf die Pflanzen aufgebracht wird.
25. Verfahren nach einem der Ausführungsformen 21 bis 24, dadurch gekennzeichnet, dass die Zusammensetzung zumindest einmal zwischen BBCH Stadium 11 und 29, vorzugsweise zwischen BBCH Stadium 11 und 19, noch mehr bevorzugt zwischen BBCH Stadium 14 und 18, auf die Pflanzen aufgebracht wird.

### BEISPIELE:

### Beispiel 1: Herstellung Zusammensetzung mit Naturzeolithtyp 1010

97 kg Zeolith (Naturzeolithtyp 1010, Zusammensetzung siehe oben) wurden gemeinsam mit 3 kg Talkum in einer Prallmühle auf eine Feinheit von maximal 8 µm vermahlen (D50% (mittlerer Durchmesser)= 2,9 µm). Die Temperatur steigt dabei auf 150°C, wodurch der Wassergehalt des Zeoliths von ursprünglich 8,5% auf 6,1% abgesenkt wurde.

Die vermahlenen Feinpartikel wurden unter ständiger Bewegung auf Raumtemperatur gekühlt und in luftdichte PE-Säcke eingeschweißt.

Eine maßanalytische Analyse ergab folgende Zusammensetzung:

| | |
|---|---|
| SiO₂ | 69,5% |
| Al₂O₃ | 12,2% |
| CaO | 2,4% |
| MgO | 1,8% |
| K₂O | 3,4% |
| H₂O | 5,9% |

### Beispiel 2: Herstellung Zusammensetzung mit Naturzeolithtyp 1011

Beispiel 1 folgend wurde eine Zusammensetzung umfassend 95 kg Zeolith (Naturzeolithtyp 1011, Zusammensetzung siehe oben) und 5 kg Talkum hergestellt.

Eine maßanalytische Analyse ergab folgende Zusammensetzung:

| | |
|---|---|
| SiO₂ | 68,60% |
| Al₂O₃ | 11,70% |
| CaO | 3,50% |
| MgO | 1,70% |
| K₂O | 3,30% |
| H₂O | 5,80% |

### Beispiel 3: Herstellung einer Zusammensetzung umfassend Tricalziumphosphat

93 kg Zeolith der Type 1010 (siehe Beispiel 1 und obige Tabellen), 3,5 kg Talkum und 3,5 kg Tricalziumphosphat (Ca₃ (PO₄₎₂) werden analog zu Beispiel 1 miteinander vermahlen, gekühlt und abgepackt.

Eine maßanalytische Analyse ergab folgende Zusammensetzung:

| | |
|---|---|
| SiO₂ | 64,8% |
| Al₂O₃ | 11,7% |
| CaO | 4,2% |
| MgO | 2,8% |
| K₂O | 3,3% |
| P₂O₅ | 1,6% |
| H₂O | 5,6% |

### Beispiel 4: Anwendungen an Kulturpflanzen

2, 2,5 oder 3 kg Mineralgemisch aus den Beispielen 1, 2 und 3 wurden jeweils in 300 1 Trinkwasser (10°dH) suspendiert (1%ige Suspension) und mittels Zerstäuberspritze gleichmäßig auf die Pflanzen eines 1 Hektar großen Ackerfelds aufgesprüht. Je nach Pflanzenart wurde dieser Vorgang im Laufe der Vegetationsperiode mehrfach wiederholt. Zur Kontrolle wurde jeweils ein benachbartes Feld mit derselben Größe und denselben Pflanzen nicht mit den erfindungsgemäßen Zusammensetzungen aus den Beispielen 1 bis 3 behandelt.

Die erfindungsgemäßen Suspensionen aus den Beispielen 1 bis 3 wurden bei Wintergetreide, Sommergetreide, Kartoffel, Bohnen, Ölkürbis, Salat, Tomaten, Soja und Zuckerrüben eingesetzt. Die erzielten Ergebnisse, die Anwendungsmengen und die Anwendungshäufigkeit sind im Folgenden dargestellt, wobei BBCH das Wachstumsstadium der Pflanzen wiedergibt, bei dem die Suspensionen eingesetzt wurden (BBCH-Skala, **B**iologische Bundesanstalt, **B**undessortenamt und **Ch**emische Industrie; siehe u.a. "Entwicklungsstadien mono- und dikotyler Pflanzen", BBCH Monografie, 2. Auflage (2001), Bearbeitet von Uwe Meier; Hack H et al. Allgemein. Nachrichtenbl. Deut. Pflanzenschutzd. 44 (1992): 265-270).

### Wintergetreide:

Wintergetreide (Weizen) wurde in den BBCH Stadien 19 (Pflanzentriebe richten sich auf, Strecken sich und die Blätter entwickeln sich) und 40 (die Blattscheide des Fahnenblattes beginnt anzuschwellen) mit je 2 kg/ha bzw. 3 kg/ha des Mineralgemischs (in Wasser suspendiert; s.o.) aus Beispiel 3 besprüht. Die Pflanzen zeigten eine intensivere Wurzelausbildung und eine bessere Trockenresistenz. Der Ertrag (Erntegewicht) konnte im Vergleich zum unbehandelten Feld um 16,8% erhöht werden.

### Sommergetreide:

Sommergetreide (Weizen) wurde in den BBCH Stadien 19 und 40 mit je 2 kg/ha bzw. 3 kg/ha des Mineralgemischs aus Beispiel 1 besprüht. Die Pflanzen zeigten eine intensivere Wurzelausbildung und eine bessere Trockenresistenz. Der Ertrag (Erntegewicht) konnte im Vergleich zum unbehandelten Feld um 17,4% erhöht werden. Zusätzlich erhöhte sich der Proteingehalt der Früchte um 5,8%.

### Kartoffel:

Kartoffelpflanzen wurden im BBCH Stadium 15 (Laubblatt (> 4 cm) am Hauptspross entfaltet) mit 2 kg/ha des Mineralgemischs aus Beispiel 1 besprüht. 14 und 28 Tage nach der Erstbehandlung wurden die Pflanzen mit 3 kg/ha Mineralgemisch aus Beispiel 1 behandelt. Die Pflanzen zeigten eine gleichmäßigere Fruchtgröße und waren kräftiger. Der Ertrag (Erntegewicht) konnte im Vergleich zum unbehandelten Feld um 20,8% erhöht werden.

### Bohnen:

Bohnenpflanzen wurden im BBCH Stadium 15 mit 3 kg/ha des Mineralgemischs aus Beispiel 2 besprüht. 14 und 28 Tage nach der Erstbehandlung wurden die Pflanzen mit 3 kg/ha Mineralgemisch aus Beispiel 2 behandelt. Die Pflanzen waren vitaler und kräftiger. Der Ertrag (Erntegewicht) konnte im Vergleich zum unbehandelten Feld um 22,6% erhöht werden.

### Ölkürbis:

Ölkürbispflanzen wurden im BBCH Stadium 15 mit 3 kg/ha des Mineralgemischs aus Beispiel 3 besprüht. Kurz vor Reihenschluss wurden die Pflanzen nochmals mit 3 kg/ha des Mineralgemischs aus Beispiel 3 behandelt. Die Pflanzen waren kräftiger und zeigten eine signifikant verbesserte Pilzresistenz. Der Ertrag (Erntegewicht) konnte im Vergleich zum unbehandelten Feld um 20,2% erhöht werden.

### Salat:

Salatpflanzen wurden im BBCH Stadium 15 mit 3 kg/ha des Mineralgemischs aus Beispiel 2 besprüht. 14 und 28 Tage nach der Erstbehandlung wurden die Pflanzen mit 3 kg/ha Mineralgemisch aus Beispiel 2 behandelt. Die Pflanzen waren kräftiger, zeigten eine bessere Kopfentwicklung und waren widerstandsfähiger gegenüber Fäulnis. Der Ertrag (Erntegewicht) konnte im Vergleich zum unbehandelten Feld um 10,2% erhöht werden.

### Tomaten:

Tomatenpflanzen wurden im BBCH Stadium 16 mit 2,5 kg/ha des Mineralgemischs aus Beispiel 1 besprüht. 14 und 28 Tage nach der Erstbehandlung wurden die Pflanzen mit 3 kg/ha Mineralgemisch aus Beispiel 1 behandelt. Die Pflanzen zeigten eine verbesserte Pilzresistenz und eine gleichmäßigere Sortierung. Der Ertrag (Erntegewicht) konnte im Vergleich zum unbehandelten Feld um 25,8% erhöht werden.

### Soja:

Sojapflanzen wurden dreimal in Dreiwochenabständen mit 3 kg/ha des Mineralgemischs aus Beispiel 2 besprüht. Die Pflanzen hatten kräftigere Wurzeln und waren an sich sehr kräftig. Zudem zeigten die Pflanzen eine verbesserte Trockenresistenz. Der Ertrag (Erntegewicht) konnte im Vergleich zum unbehandelten Feld um 13,8% erhöht werden.

### Zuckerrübe:

Zuckerrübenpflanzen wurden dreimal in Dreiwochenabständen mit 3 kg/ha des Mineralgemischs aus Beispiel 3 besprüht. Die Pflanzen waren widerstandsfähiger gegenüber Krankheiten und zeigten eine verbesserte Trockenresistenz. Der Ertrag (Erntegewicht) konnte im Vergleich zum unbehandelten Feld um 10,2% erhöht werden.

## Patentansprüche

1. Zusammensetzung enthaltend Partikel umfassend mindestens ein Zeolith, wobei die Partikel zumindest teilweise mit zumindest einem Schichtsilikat beschichtet sind.

2. Zusammensetzung nach Anspruch 1, **dadurch gekennzeichnet, dass** die Zusammensetzung Partikel umfassend mindestens ein Schichtsilikat umfasst.

3. Zusammensetzung nach Anspruch 1 oder 2, **dadurch gekennzeichnet, dass** das mindestens eine Schichtsilikat eine Mohs-Härte von 3 oder weniger aufweist.

4. Zusammensetzung nach einem der Ansprüche 1 bis 3, **dadurch gekennzeichnet, dass** die Partikel einen mittleren Durchmesser von weniger als 50 µm, vorzugsweise von weniger als 30 µm, noch mehr bevorzugt von weniger als 20 µm, noch mehr bevorzugt von weniger als 15 µm, noch mehr bevorzugt von weniger als 10 µm, noch mehr bevorzugt von weniger als 5 µm, aufweisen.

5. Zusammensetzung nach einem der Ansprüche 1 bis 4, **dadurch gekennzeichnet, dass** die Partikel einen Durchmesser von 0,5 bis 50 µm, vorzugsweise von 1 bis 30 µm, noch mehr bevorzugt von 1,5 bis 20 µm, noch mehr bevorzugt von 2 bis 15 µm, noch mehr bevorzugt von 2,5 bis 10 µm, aufweisen.

6. Zusammensetzung nach einem der Ansprüche 1 bis 5, **dadurch gekennzeichnet, dass** die Zusammensetzung mindestens ein Salz der Phosphorsäure, insbesondere der ortho-Phosphorsäure, umfasst.

7. Zusammensetzung nach Anspruch 6, **dadurch gekennzeichnet, dass** die Zusammensetzung 0,1 bis 20 Gew.%, vorzugsweise 0,2 bis 15 Gew.%, noch mehr bevorzugt 0,3 bis 10 Gew.%, noch mehr bevorzugt 0,4 bis 5 Gew.%, noch mehr bevorzugt 0,5 bis 3 Gew.%, des mindestens einen Salzes der Phosphorsäure bezogen auf Zeolith umfasst.

8. Zusammensetzung nach einem der Ansprüche 1 bis 7, **dadurch gekennzeichnet, dass** das mindestens eine Zeolith ein natürliches oder synthetisches Zeolith ist.

9. Zusammensetzung nach einem der Ansprüche 1 bis 8, **dadurch gekennzeichnet, dass** das mindestens eine Schichtsilikat ausgewählt ist aus der Gruppe bestehend aus Talk, Vermiculit, Montmorillonit, Muskovit, Pyrophillit und Kombinationen davon.

10. Zusammensetzung nach einem der Ansprüche 1 bis 9, **dadurch gekennzeichnet, dass** die Zusammensetzung im Wesentlichen frei von Tensiden ist.

11. Zusammensetzung nach einem der Ansprüche 1 bis 10, **dadurch gekennzeichnet, dass** die Zusammensetzung Wasser umfasst.

12. Verfahren zur Herstellung einer Zusammensetzung nach einem der Ansprüche 1 bis 11 umfassend den Schritt des Vermahlens mindestens eines Zeoliths und mindestens eines Schichtsilikats.

13. Zusammensetzung herstellbar mit einem Verfahren nach Anspruch 17 oder 18.

14. Verwendung einer Zusammensetzung nach einem der Ansprüche 1 bis 16 oder 19 zur Behandlung von Pflanzen, vorzugsweise von Kulturpflanzen.

15. Verfahren zur Behandlung von Pflanzen, insbesondere von Kulturpflanzen, umfassend den Schritt des Aufbringens einer Zusammensetzung nach einem der Ansprüche 1 bis 11 oder 13 auf Pflanzen, insbesondere auf Kulturpflanzen.
